# EUROPÄISCHE PATENTSCHRIFT

(11) **EP 0 633 122 B1**
(45) Veröffentlichungstag und Bekanntmachung des Hinweises auf die Patenterteilung: **07.04.1999**
(21) Anmeldenummer: 94110153.7
(22) Anmeldetag: 29.06.1994
(51) Int. Cl.: B29C 49/24, B29C 49/00, B29C 65/08

(54) **Verfahren zur Herstellung eines Behälters mit flexiblem Innenbeutel**
Method for fabrication of containers with flexible inner bags
Procédé pour la fabrication d'un récipient avec une poche interne souple

(30) Priorität: 06.07.1993 DE 4322514
(43) Veröffentlichungstag der Anmeldung: 11.01.1995
(73) Patentinhaber: GAPLAST GmbH, D-82442 Altenau (DE)
(72) Erfinder: Kneer, Roland, D-82490 Farchant (DE)
(74) Vertreter: Flosdorff, Jürgen, Dr.

(56) Entgegenhaltungen:
- EP-A- 0 189 750
- EP-A- 0 532 873
- WO-A-90/11938
- WO-A-91/08100
- WO-A-91/08957
- FR-A- 1 310 519
- FR-A- 2 645 503
- FR-A- 2 676 958
- US-A- 3 091 000
- US-A- 3 113 831

## Beschreibung

Die Erfindung betrifft ein Verfahren zur Herstellung eines Behälters mit einem darin befindlichen, flexiblen Innenbeutel.

Der Behälter kann starr ausgebildet oder aber verformbar, elastisch oder auch plastisch zusammendrückbar sein wie eine Tube, die eine pastenartige Substanz abgibt. Bevorzugt ist jedoch der Behälter zur Aufnahme und Abgabe eines flüssigen Behälterinhalts bestimmt, welches vorzugsweise mittels einer am Behälterhals zu befestigenden Pumpe ausgebracht wird.

Die FR-A-2676958 offenbart ein Verfahren zur Herstellung eines Behälters der betrachteten Art. Bei diesem bekannten Verfahren wird zunächst der starre Behälter hergestellt und in dessen Boden ein Loch ausgebildet, durch das der Druckausgleich erfolgt. Außerdem wird ein Rohling eines Innenbeutels hergestellt und durch den Behälterhals in den Behälter eingeführt, woraufhin der Innenbeutel durch Einführung von Druckluft durch den Behälterhals so aufgeblasen wird, daß er sich als Innenbeutel an die Innenwände des Behälters anlegt. Dann wird der Innenbeutel dauerhaft am Rand des Behälterhalses befestigt.

Bei diesem vorbekannten Behälter wird die Füllsubstanz durch den Behälterhals in den Innenbeutel eingefüllt und durch diesen abgegeben, wobei sich der Innenbeutel allmählich zusammenzieht und durch das bodenseitige Loch der Druckausgleich erfolgt.

Die EP 0 182 094 B1 offenbart einen ähnlichen Behälter, der zwar im Coextrusionsverfahren aus zwei Schichten aus unterschiedlichen, keine Verbindung miteinander eingehenden thermoplastischen Kunststoffen hergestellt wird, bei dem jedoch auch in dem Boden des Außenbehälters eine Druckausgleichsöffnung in Form einer offenen Naht entsteht, während der Innenbeutel am Boden geschlossen und an der Halsöffnung des Behälters befestigt ist. Auch bei diesem Behälter wird die Füllsubstanz in den weichen Innenbeutel eingefüllt und aus dem Behälterhals abgegeben. Zur Sicherstellung eines möglichst vollständigen Entleerungsvorganges des Innenbeutels, greift ein Steigrohr in den Innenbeutel ein, da der Innenbeutel ohne dieses Steigrohr in axialer Richtung des Behälters nicht gehalten ist und bei teilweiser Entleerung so zusammenfallen kann, daß ein weiterer Entleerungsvorgang unmöglich wird. Das Steigrohr hält den Innenbeutel bei dem vorbekannten Behälter in gestreckter Lage, um eine vollständige Entleerung zu ermöglichen.

Dasselbe Problem tritt bei dem Behälter gemäß der FR-A-2676958 auf, bei dem ohne eine zusätzliche Maßnahme nicht gewährleistet ist, daß der Innenbeutel vollständig entleert werden kann.

Der vorliegenden Erfindung liegt die Aufgabe zugrunde, ein Verfahren zur Herstellung eines Behälters der betrachteten Art anzugeben, der vollständig entleerbar ist, ohne daß hierzu zusätzliche Mittel vorgesehen sein müssen.

Diese Aufgabe wird erfindungsgemäß durch die im Kennzeichen des Patentanspruchs 1 angegebenen Verfahrensschritte gelöst. Vorteilhafte Ausgestaltungen des Verfahrens sind in den abhängigen Ansprüchen gekennzeichnet.

Gemäß dem erfindungsgemäßen Verfahren wird zunächst der Außenbehälter hergestellt, der bevorzugt im Blasverfahren erzeugt wird, ohne daß die Erfindung hierauf beschränkt ist. Gleichzeitig oder im Anschluß an das Blasformen des Behälters wird ein Loch im Bodenbereich ausgebildet, bevorzugt in der Mitte des Bodens des Behälters. Dieses Loch hat eine solche Größe, daß der in einem getrennten Herstellungsschritt hergestellte Rohling des Innenbeutels durch das Loch in den Behälter eingeführt werden kann.

Hierzu wird der Rohling auf einen Blasdorn aufgesteckt, der den Rohling durch das bodenseitige Loch in den Behälter einführt, wobei entweder der Blasdorn in den Behälter hineinbewegt wird, oder aber der Behälter über den stationär verbleibenden Blasdorn vorgeschoben wird.

Der in den Behälter eingeführte Rohling wird so aufgeblasen, daß der Innenbeutel sich an die Innenwände des Behälters anlegt, der hierbei die Funktion der Blasform übernimmt.

Anschließend wird der aufgeblasene Rohling, der die Form des inneren Hohlraums des Behälters angenommen hat, dauerhaft und dicht am Rand des bodenseitigen Lochs befestigt.

Der so hergestellte Behälter nimmt die vorzugsweise mittels einer airless-Pumpe abzugebende Flüssigkeit in sich auf, während der Innenbeutel evakuiert ist, wobei der Innenbeutel den Innenraum des Behälters gegenüber dem bodenseitigen Loch abdichtet, so daß hier keinerlei Flüssigkeit austreten kann. Während der Abgabe der Flüssigkeit erfolgt der Druckausgleich in dem Behälter dadurch, daß durch das bodenseitige Loch Luft in den flexiblen Innenbeutel eintritt, dessen Volumen sich entsprechend der Volumenverringerung der im Behälter befindlichen Flüssigkeit vergrößert. Da der Innenbeutel durch den Blasvorgang innerhalb des Behälters eine mit dessen Innenkontur übereinstimmende Form erhalten hat, kann der Behälter auf diese Weise vollständig entleert werden, da bis zur Abgabe des gesamten Behälterinhalts stets der entsprechende Druckausgleich erfolgen kann.

Die vollständige Abgabe der gesamten Behälterflüssigkeit wird auch dadurch gefördert, daß der für den Druckausgleich sorgende flexible Innenbeutel am Boden des Behälters angebracht ist, an den er zunächst durch den Druck der im Behälter befindlichen Flüssigkeit angedrückt sein kann, und von dem aus er sich zunehmend in Richtung des Behälterhalses ausweiten kann.

Das bodenseitige Loch kann während des Blasformens des Behälters ausgebildet werden, indem der Behälter "über Dorn kalibriert" wird, d.h. blasgeformt wird, während sich ein Dorn durch seinen Bodenbereich erstreckt.

Zweckmäßiger dürfte es jedoch sein, das bodenseitige Loch nach dem Blasformen des Behälters auszubilden, wozu vorzugsweise ein "verlorener Kopf" an entsprechender Stelle angeblasen werden kann, der noch im Werkzeug abgetrennt wird. Hierzu wird weiter mit Vorteil vorgeschlagen, daß der Boden des Behälters leicht konisch nach außen geneigt zu dem angeblasenen, verlorenen Kopf verläuft, und daß dieser zunächst nach außen bzw. unten konisch zulaufende Boden des Behälters nach dem Abtrennen des "verlorenen Kopfes" nach innen gedrückt wird, so daß er in dieser endgültigen Lage schräg einwärts gerichtet ist. Die Einwärtsverlagerung des Bodens sollte ein solches Ausmaß haben, daß ein das bodenseitige Loch verschließender Stopfen entweder mit der Aufstandfläche des Behälters fluchtet oder gegenüber dieser zurückversetzt ist, so daß der Behälter im aufrechten Zustand einen sicheren Stand finden kann.

Es liegt im Rahmen der Erfindung, daß das Loch im Boden des Behälters auch in einer Nachbearbeitungsstation aus der Bodenwand ausgeschnitten werden kann, wobei dafür Sorge zu tragen ist, daß keine Späne im Behälter zurückbleiben.

Der Rohling des Innenbeutels wird vorzugsweise im Spritzgußverfahren hergestellt, wobei an dem offenen Ende des Rohlings ein ringförmiger Stopfen angespritzt werden sollte, der in der in den Behälter eingesetzten Lage des Rohlings an der Lochwandung anliegt und diese untergreift. Außerdem wird vorgeschlagen, daß seitlich an dem ringförmigen Stopfen ein Bodendeckel mit einer Durchgangsbohrung angespritzt wird, wobei die Durchgangsbohrung beispielsweise mit einem Einwegventil, einem sogenannten "Flatterventil" versehen sein kann. Die Durchgangsbohrung kann aber auch offen bleiben, vor allem dann, wenn sie nur eine geringe Größe hat.

Der Rohling hat vorzugsweise die Form eines zylindrischen Rohrabschnitts, was vor allem dann zweckmäßig ist, wenn der zugehörige Behälter ebenfalls eine Zylinderform hat. Wenn der Behälter nicht rotationssymmetrisch, sondern beispielsweise oval ist, kann der Rohling des Innenbeutels entweder eine entsprechende Querschnittsform haben, oder aber eine zylindrische Rohrform mit Wandabschnitten unterschiedlicher Dicke, so daß der Innenbeutel im blasgeformten Zustand eine konstante Wandstärke hat.

Mit Vorteil wird vorgeschlagen, daß der Rohling im Eckbereich des Übergangs von der vorzugsweise zylindrischen Umfangswand in die obere Abschlußwand und an dem unmittelbar über der Bodenwand des Behälters befindlichen Bereich eine vergrößerte Wandstärke hat, da der Rohling in diesen Bereichen eine größere Verformung als in den übrigen Bereichen erfährt. Damit hat der Rohling (querschnittlich betrachtet) nach dem Blasformen auch in den Eckbereichen des Behälters dieselbe Wandstärke wie in den übrigen Bereichen.

Vor dem Blasvorgang kann ein Dorn in den Flaschenhals eingetaucht werden, der verhindert, daß der Innenbeutel beim Aufblasen in den Flaschenhals hineingedrückt wird.

Nach dem Herstellen des Rohlings kann dieser vor der weiteren Bearbeitung zwischengelagert werden. Wenn dies der Fall ist, muß der Rohling vor dem Blasformen auf Blastemperatur erwärmt werden, wozu der ihn aufnehmende Blasdorn mit einer entsprechenden Heizeinrichtung versehen sein kann. Außerdem wird mit Vorteil vorgeschlagen, daß der Rohling auf dem Blasdorn axial gereckt werden kann, um die Permeationswerte des Innenbeutels zu verbessern. Es wird aber darauf hingewiesen, daß das axiale Recken nicht unbedingt erforderlich ist.

Nach dem Blasformen kann ein Kühlschritt erfolgen, beispielsweise durch Umluft oder durch Anblasen mit Kühlluft. Nach diesem Schritt, der nicht unbedingt erforderlich ist, wird der ringförmige Stopfen dauerhaft und dicht am Rand des bodenseitigen Lochs befestigt. Hierzu wird mit besonderem Vorteil vorgeschlagen, das Abdichtelement mit dem Behälterboden zu verschweißen, wozu insbesondere das Ultraschallschweißen geeignet ist. Hierbei ist selbstverständlich vorausgesetzt, daß sich die Materialien des Behälters und des Innenbeutels miteinander verschweißen lassen.

Beispielsweise kann der Behälter aus PE, PP oder PET bestehen, während der Innenbeutel z.B. aus einem passenden blasbaren thermoplastischen Kunststoff hergestellt sein kann.

Es kommen auch andere Arten einer dichten, auf Dauer zuverlässigen Verbindung zwischen dem vorzugsweise ringförmigen Stopfen des Innenbeutels und dem Behälterboden in Betracht. Hierzu wird in einer besonders vorteilhaften Ausgestaltung der Erfindung vorgeschlagen, daß ein Schmelzkleberring auf das bodenseitige Loch des Behälters aufgesteckt wird, bevor der Rohling des Innenbeutels eingeführt und geblasen wird. Das Schmelzformteil kann dabei aus einem Heißschmelzkleber- oder Niedrigtemperaturschmelzklebermaterial bestehen. Der Schmelzring kann dabei entweder mit der ersten Wärme den Behälter mit dem Innenbeutel verschweißen, oder an einer nachgeschalteten Ultraschall- oder Heizspiegelstation, je nach Werkstoffkombination. Insbesondere dann, wenn der Schmelzring in der Blasform mit der ersten Wärme geschmolzen wird und dabei den ringförmigen Stopfen des Innenbeutels am Rand des bodenseitigen Lochs des Behälters anschweißt oder anklebt, wird auf besonders einfache Weise die angestrebte dichte Verbindung geschaffen.

Um zu verhindern, daß der Innenbeutel an der Behälterwandung anklebt, sollte anschließend ein Unterdruck durch das bodenseitige Loch und/oder ein Überdruck durch den Behälterhals aufgebracht werden, um den Innenbeutel zu evakuieren und radial oder axial zum Behälterboden zusammen zu drücken. Während dieses Bearbeitungsschritts kann die Dichtigkeit des Innenbeutels und seines Anschlusses an die Bodenwand des Behälters geprüft werden, indem beispielsweise der einwirkende Druck überwacht wird.

In einem abschließenden Bearbeitungsschritt kann der angespritzte Deckelboden ergriffen und auf mechanischem Wege umgeklappt und in den ringförmigen Stopfen eingesetzt werden, womit das Bodenloch (bis auf das für den Druckausgleich sorgende Einwegventil oder eine entsprechende offene Bohrung) verschlossen ist. Hierdurch wird das mißbräuchliche Einführen von Gegenständen durch das Bodenloch verhindert, was zu einer Beschädigung des Innenbeutels führen könnte.

Zur Durchführung des erfindungsgemäßen Verfahrens kann eine Rundtaktmaschine mit mehreren Stationen verwendet werden, in deren Mitte ein drehbares Joch mit Kernen angeordnet sein kann. Hierbei kann an einer ersten Station der Spritzvorgang der Rohlinge erfolgen, während an einer zweiten Station -ohne vorheriges Aufheizen, da die Rohlinge nicht zwischengelagert, sondern sogleich weiter verarbeitet werden- die Zufuhr der Behälter erfolgen kann, die hierzu auf die Rohlinge aufgesteckt werden. Nach dem Blasformen kann an einer weiteren Station das Evakuieren der Innenbeutel und das Auswerfen des vollständigen Behälters erfolgen, wobei an einer nachgeordneten Bearbeitungsstation der oben beschriebene Schweißvorgang und das Umklappen des Deckelbodens erfolgen können.

Das erfindungsgemäße Verfahren ermöglicht auf einfache Weise die Herstellung eines Behälters mit einem darin befindlichen und am Behälterboden befestigten flexiblen Innenbeutel, der die in den Behälter aufgenommene Flüssigkeit dauerhaft sicher gegenüber dem bodenseitigen Loch des Behälters abdichtet. Der Innenbeutel hat eine mit der Innenkontur des Behälters übereinstimmende Form und ermöglicht so eine vollständige Entleerung der Behälterflüssigkeit, da bis zuletzt ein ausreichende Druckausgleich erfolgen kann. Bei dem erfindungsgemäßen Behälter kommt der Behälterinhalt - bei dem es sich vorzugsweise um eine Flüssigkeit handelt, der jedoch auch durch eine pasteuse Masse gebildet sein kann - nicht mit der zum Hervorrufen eines Druckausgleichs eintretenden Luft in Berührung, so daß der Behälterinhalt konservierungsmittelfrei sein kann. Der Behälter ist vorzugsweise mit einer sogenannten Airless-Pumpe zum Ausbringen der Flüssigkeit versehen, die den Eintritt von Luft in den die Behälterflüssigkeit enthaltenden Raum verhindert. Die Erfindung ist aber nicht auf die Ausstattung des Behälters mit einer Airless-Pumpe beschränkt.

Weitere Merkmale, Vorteile und Einzelheiten der Erfindung ergeben sich aus der nachfolgenden Beschreibung sowie anhand der Zeichnung. Dabei zeigen:
- Fig. 1: einen Längsschnitt durch einen Rohling des flexiblen Innenbeutels;
- Fig. 2: den Zustand, in dem der Rohling gemäß Fig. 1 in einen flaschenförmigen Behälter eingesetzt ist, ebenfalls im Längsschnitt dargestellt;
- Fig. 3: die Anordnung gemäß Fig. 2 in dem Zustand, in dem der flexible Innenbeutel blasgeformt ist,
- Fig. 4: den fertigen, mit einer Airless-Pumpe versehenen Behälter mit zusammengedrücktem Innenbeutel und
- Fig. 5: eine alternative Anordnung im Bereich des bodenseitigen Lochs.

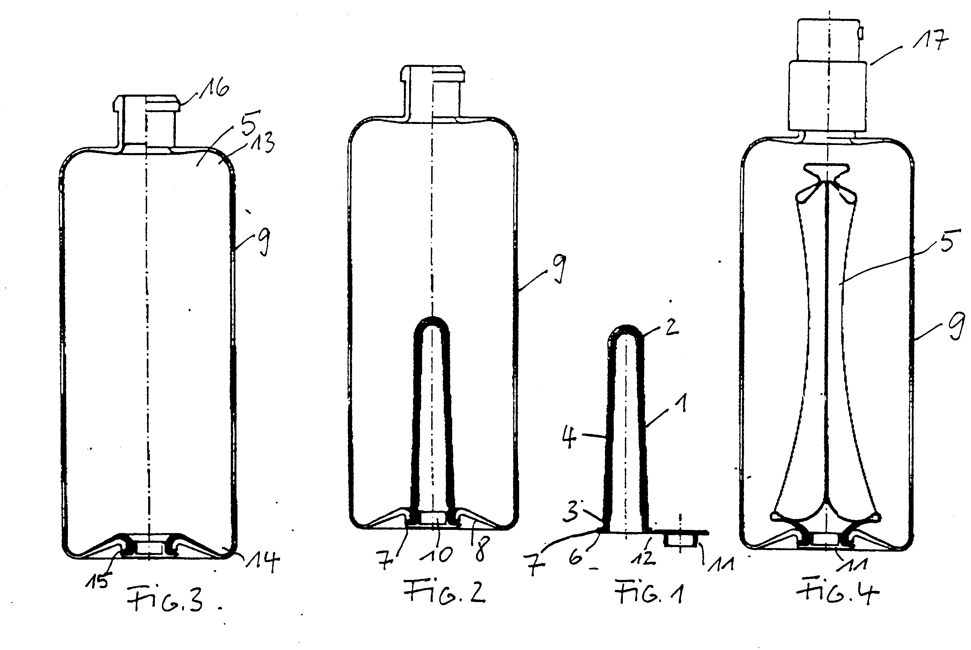

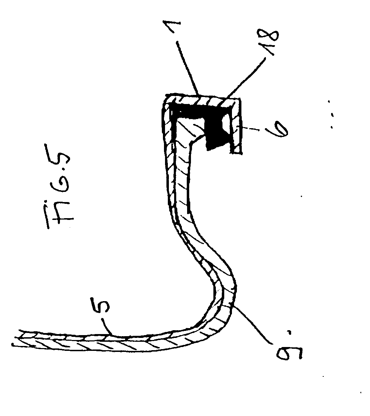

Fig. 1 zeigt einen Vorformling bzw. Spritzling 1, der eine rotationssymmetrische, oben geschlossene Schlauchform hat, mit einer Wanddicke, die im oberen Ringbereich 2 und einem unteren Ringbereich 3 gegenüber den anderen Wandabschnitten verstärkt ist, da diese Bereiche beim Blasvorgang einer größeren Verformung unterworfen werden als der dazwischen befindliche zylindrische Wandabschnitt 4. Auf diese Weise erhält der fertig aufgeblasene Innenbeutel 5 (siehe Fig. 3) eine gleichmäßige Wanddicke.

Am offenen Endbereich des Rohlings 1 ist ein ringförmiger Stopfen bzw. Dichtring 6 mit radial nach außen weisendem, ringförmigem Vorsprung 7 angeformt, der den Randbereicheines im Boden 8 eines Behälters 9 ausgebildeten Lochs untergreift. Der ringförmige Stopfenabschnitt hat solche Abmessungen, daß er sich an die Wandung des Lochs 10 anlegt.

Wie Fig. 1 zeigt, ist an dem ringförmigen Stopfenabschnitt 6 seitlich ein Bodendeckel 11 angespritzt, und zwar über einen geschwächten Verbindungsabschnitt bzw. ein Filmscharnier 12, welches das weiter unten beschriebene Umklappen des Bodendeckels 11 erleichtert.

Gemäß dem erfindungsgemäßen Verfahren wird der Rohling 1 auf einem nicht dargestellten Blasdorn gehalten und durch da bodenseitige Loch 10 eines zuvor geblasenen flaschenförmigen Behälters 9 eingeführt, und zwar so weit, bis sich der ringförmige Ansatz 7 des Stopfenabschnitts 6 des Rohlings 1 an den das bodenseitige Loch 10 umgebenden Randabschnitt des Bodens 8 des Behälters 9 anlegt. Der Rohling 1 ist dabei auf Blastemperatur erwärmt.

Bei dem nachfolgenden Blasvorgang wird der Rohling 1 so aufgeblasen, daß er sich an die Innenwand des Behälters 9 anlegt, wie Fig. 3 zeigt. Der so entstehende Innenbeutel 5 hat in den Eckbereichen 13 und 14 (siehe Fig. 3) dieselbe Wanddicke wie in den übrigen Bereichen, und zwar wegen der verdickten Wandabschnitte 2 und 3 des Rohlings 1.

Nach dem Aufblasen des Innenbeutels 5 wird der ringförmige Vorsprung 7 des Stopfenabschnitts 6 des Innenbeutels 5 durch Ultraschall mit den angrenzenden Wandabschnitten des Bodens 8 des Behälters 9 verschweißt, wobei diese Schweißnaht in Fig. 3 mit den Bezugszeichen 15 angedeutet ist.

Anschließend wird durch Aufbringen eines Unterdrucks durch die bodenseitige Öffnung 10 und/oder durch Aufbringen eines Überdrucks durch den Behälterhals 16 der Innenbeutel 5 evakuiert und zusammengedrückt, wie Fig. 4 andeutet. In der Darstellung der Fig. 4 ist der Innenbeutel 5 radial zusammengedrückt, wobei je nach Ausbildung des Innenbeutels auch die Möglichkeit besteht, daß der Innenbeutel 5 am Boden des Behälters 9, d.h. axial zusammengedrückt wird.

Durch das Evakuieren und Zusammendrücken bzw. Zusammenziehen des Innenbeutels 5 löst sich dieser von den Innenwänden des Behälters 9, so daß er dort nicht ankleben kann.

Nach dem Kollabieren des Innenbeutels 5 wird der Bodendeckel 11 ergriffen und so um das Filmscharnier 12 geklappt, daß der Bodendeckel 11 in die Öffnung des ringförmigen Stopfenabschnitts 6 eingreift. Der Bodendeckel 11 enthält eine nicht dargestellte Durchgangsbohrung, die den Eintritt von Luft in den Innenbeutel zuläßt.

Fig. 4 zeigt, daß der Behälter mit einer Airless-Pumpe 17 versehen wird, mit der die in den Behälter 9 eingefüllte Flüssigkeit ausgebracht werden kann.

Diese Flüssigkeit wird vor der Befestigung der Pumpe 17 durch den Flaschenhals 16 in den Behälter 9 eingefüllt. Beim Abgeben dieser Flüssigkeit durch Betätigung der Pumpe 17 dehnt sich der Innenbeutel 7 entsprechend der Volumenverringerung der Behälterflüssigkeit aus, so daß ein ständiger Druckausgleich erfolgt. Durch das Verschweißen des Innenbeutels 5 mit dem Behälterboden ist eine dauerhafte Abdichtung des Behälterinnenraums geschaffen, so daß der Behälter über mehrere Jahre gelagert werden kann, ohne undicht zu werden.

Alternativ zu dem Vorstehenden kann der Innenbeutel mit Überdruck beladen werden, so daß keine Pumpe, sondern nur ein Ventil zum Ausbringen der Behälterflüssigkeit erforderlich ist.

Fig. 5 zeigt eine besonders bevorzugte Ausgestaltung des Bodenbereichs des Behälters. Ein Schmelzkleberring 18, der beispielsweise bei 70 bis 80⁰ schmilzt, wird derart in das bodenseitige Loch des Behälters 9 eingesetzt, daß er den Rand des Lochs übergreift. Anschließend wird der Rohling 1 in das bodenseitige Loch eingeführt, so daß der Stopfenabschnitt 6 des Rohlings sich an den Schmelzring 18 anlegt, woraufhin der Rohling geblasen wird. Durch die Wärme des Rohlings schmilzt der Ring 18 und verschweißt den Innenbeutel mit dem Behälter im Bereich des bodenseitigen Lochs. Hierdurch ist das Herstellungsverfahren des Behälters erheblich vereinfacht.

## Patentansprüche

1. Verfahren zur Herstellung eines einen flexiblen Innenbeutel enthaltenden Behälters, bei dem die Füllsubstanz aus einer Behälteröffnung abgegeben wird und der Druckausgleich bei der Abgabe der Füllsubstanz in der Weise erfolgt, daß eintretende Luft mit der Füllsubstanz nicht in Kontakt gerät, mit folgenden Schritten:
Herstellen des Behälters und Ausbilden eines Lochs im Bodenbereich des Behälters;
Einführen eines Rohlings in den Behälter;
Blasen des Rohlings, so daß sich der so gebildete Innenbeutel an die Innenwände des Behälters anlegt, und
dauerhaftes und dichtes Befestigen des Innenbeutels am Behälter, **dadurch gekennzeichnet**,
daß der Rohling durch das bodenseitige Loch in den Behälter eingeführt und am Rand des bodenseitigen Lochs befestigt wird.

2. Verfahren nach Anspruch 1,
dadurch gekennzeichnet, daß das bodenseitige Loch während des Blasformens des Behälters ausgebildet wird.

3. Verfahren nach Anspruch 1,
dadurch gekennzeichnet, daß das bodenseitige Loch nach dem Blasformen des Behälters ausgebildet wird.

4. Verfahren nach einem der Ansprüche 1 bis 3,
dadurch gekennzeichnet, daß der Rohling im Spritzgußverfahren hergestellt wird, wobei an seinem offenen Ende ein ringförmiger Stoßfenabschnitt angespritzt wird.

5. Verfahren nach Anspruch 4,
dadurch gekennzeichnet, daß an dem ringförmigen Stopfenabschnitt ein Bodendeck mit einer Durchgangsbohrung angespritzt wird.

6. Verfahren nach einem der Ansprüche 1 bis 5,
dadurch gekennzeichnet, daß der Rohling vor dem Blasvorgang auf dem Blasdorn erwärmt wird.

7. Verfahren nach einem der Ansprüche 1 bis 6,
dadurch gekennzeichnet, daß ein Schmelzring (18) auf den Rand des bodenseitigen Lochs des Behälters aufgesteckt wird, bevor der Rohling in den Behälter eingeführt wird.

8. Verfahren nach einem der Ansprüche 1 bis 7,
dadurch gekennzeichnet, daß der angespritzte ringförmige Stopfen bei dem oder nach dem Blasvorgang mit dem Behälterboden verschweißt wird.

9. Verfahren nach einem der Ansprüche 1 bis 8,
dadurch gekennzeichnet, daß nach dem Befestigen des ringförmigen Stopfens am Behälterboden durch das bodenseitige Loch ein Unterdruck und/oder durch den Behälterhals ein Überdruck ausgeübt wird, um den Innenbeutel zusammenzuziehen bzw. zusammenzudrücken.

10. Verfahren nach einem der Ansprüche 1 bis 9,
dadurch gekennzeichnet, daß der angespritzte Bodendeckel ergriffen, umgeklappt und in den ringförmigen Stopfenabschnitt des Innenbeutels eingesetzt wird.

## Claims

1. A method of producing a container containing a flexible inner bag, in which the filling substance is delivered from a container opening and the pressure equalisation takes place upon delivery of the filling substance such that air entering does not come into contact with the filling substance, with the following steps:
producing the container and forming a hole in the bottom region of the container;
introducing a parison into the container;
blowing the parison, so that the inner bag thus formed is applied to the inner walls of the container, and securing the inner bag to the container in a durable and sealed manner, characterised in that
the parison is introduced into the container through the hole in the bottom and secured to the edge of the hole in the bottom.

2. Method according to claim 1,
characterised in that the hole in the bottom is formed while the container is blow-moulded.

3. Method according to claim 1,
characterised in that the hole in the bottom is formed after the container has been blow-moulded.

4. Method according to any one of claims 1 to 3,
characterised in that the parison is produced in an injection moulding method, wherein an annular stopper section is injection-moulded on its open end.

5. Method according to claim 4,
characterised in that a bottom cover with a through-bore is injection-moulded on the annular stopper section.

6. Method according to any one of claims 1 to 5,
characterised in that the parison is heated on the blow mandrel before the blow-moulding operation.

7. Method according to any one of claims 1 to 6,
characterised in that a hot-melt ring (18) is placed on the edge of the hole in the bottom of the container before the parison is introduced into the container.

8. Method according to any one of claims 1 to 7,
characterised in that the moulded-on annular stopper is welded to the container bottom during or after the blow moulding operation.

9. Method according to any one of claims 1 to 8,
characterised in that an underpressure is exerted through the hole in the bottom and/or an overpressure through the container neck in order to contract or compress the inner bag after the annular stopper has been secured to the container bottom.

10. Method according to any one of claims 1 to 9,
characterised in that the moulded-on bottom cover is gripped, flipped over and inserted in the annular stopper section of the inner bag.

## Revendications

1. Procédé pour la fabrication d'un récipient contenant une poche interne souple, dans lequel la substance de remplissage sort d'un orifice de récipient et la compensation de pression lors de la sortie de la substance de remplissage s'effectue de telle sorte que de l'air entrant ne vient pas en contact avec la substance de remplissage, comprenant les étapes suivantes :
fabrication du récipient et formation d'un trou dans la zone du fond du récipient ;
introduction d'une ébauche dans le récipient ;
gonflement par soufflage de l'ébauche de telle sorte que la poche interne ainsi formée s'appuie contre les parois intérieures du récipient ; et
fixation durable et étanche de la poche interne au récipient,
caractérisé en ce que
l'ébauche est introduite dans le récipient par le trou situé du côté du fond et est fixée au bord du trou situé du côté du fond.

2. Procédé selon la revendication 1,
caractérisé en ce que le trou situé du côté du fond est formé pendant le formage par soufflage du récipient.

3. Procédé selon la revendication 1,
caractérisé en ce que le trou situé du côté du fond est formé après le formage par soufflage du récipient.

4. Procédé selon l'une des revendications 1 à 3,
caractérisé en ce que l'ébauche est fabriquée par un procédé de moulage par injection, un tronçon formant bouchon annulaire étant formé par injection sur l'extrémité ouverte de cette ébauche.

5. Procédé selon la revendication 4,
caractérisé en ce qu'un couvercle de fond avec un trou de passage est formé par injection sur le tronçon formant bouchon annulaire.

6. Procédé selon l'une des revendications 1 à 5,
caractérisé en ce que l'ébauche est réchauffée avant l'opération de soufflage sur le mandrin de soufflage.

7. Procédé selon l'une des revendications 1 à 6,
caractérisé en ce qu'un anneau à fusion (18) est placé sur le bord du trou côté fond du récipient avant que l'ébauche soit introduite dans le récipient.

8. Procédé selon l'une des revendications 1 à 7,
caractérisé en ce que le bouchon annulaire formé par injection est soudé au fond de récipient pendant ou après l'opération de soufflage.

9. Procédé selon l'une des revendications 1 à 8,
caractérisé en ce que, après la fixation du bouchon annulaire au fond de récipient, une dépression est exercée à travers le trou côté fond et/ou une surpression est exercée à travers le goulot du récipient afin de comprimer ou contracter la poche interne.

10. Procédé selon l'une des revendications 1 à 9,
caractérisé en ce que le couvercle de fond formé par injection est saisi, rabattu et placé dans le tronçon formant bouchon annulaire de la poche interne.
